# FASCICULE DE BREVET EUROPEEN

(11) **EP 3 190 649 B1**
(45) Date de publication et mention de la délivrance du brevet: **14.02.2018**
(21) Numéro de dépôt: 16204211.3
(22) Date de dépôt: 15.12.2016
(51) Int. Cl.: H01M 4/66, H01M 10/0525

(54) **ACCUMULATEUR LITHIUM-ION**
LITHIUM-IONEN-AKKUMULATOR
LITHIUM-ION STORAGE BATTERY

(30) Priorité: 08.01.2016 FR 1650156
(43) Date de publication de la demande: 12.07.2017
(73) Titulaire: COMMISSARIAT À L'ÉNERGIE ATOMIQUE ET AUX ÉNERGIES ALTERNATIVES, 75015 Paris (FR)
(72) Inventeur: MARTIN, Jean-Frédéric, 38140 RENAGE (FR); THOMAS, Yohann, 38000 GRENOBLE (FR)
(74) Mandataire: Cabinet Laurent & Charras

(56) Documents cités:
- FR-A1- 2 624 526
- FR-A1- 2 944 149
- US-A1- 2013 157 129

## Description

### DOMAINE DE L'INVENTION

La présente invention concerne un accumulateur lithium-ion ayant une électrode positive associée à un collecteur de courant en aluminium fonctionnalisé avec des groupements aromatiques.

Le domaine d'utilisation de la présente invention concerne de manière générale le stockage de l'énergie, et plus particulièrement la conversion d'énergie chimique en énergie électrique.

### ETAT ANTERIEUR DE LA TECHNIQUE

Typiquement, un accumulateur de type lithium-ion comprend successivement une électrode négative, un électrolyte et une électrode positive.

Son fonctionnement en cycle de décharge est assuré par le transfert d'ions lithium de l'électrode négative (anode) vers l'électrode positive (cathode), et par le transfert d'électrons de l'électrode négative (anode) vers l'électrode positive (cathode) grâce à un circuit extérieur. Ces transferts sont réversibles de manière à permettre la charge de l'accumulateur.

Les électrodes sont généralement associées à des collecteurs de courant qui assurent les mouvements d'électrons entre elles.

L'électrolyte comprend généralement un sel de lithium, par exemple du bis(trifluorométhane)sulfonimide de lithium (LiTFSI) ou de l'hexafluorophosphate de lithium (LiPF₆).

Lors du fonctionnement de l'accumulateur, le sel d'électrolyte peut éventuellement se décomposer partiellement, et ainsi altérer les propriétés de l'accumulateur. A titre d'exemple, le sel LiPF₆ peut générer des composés de type HF. La présence de sel LiTFSI dans un électrolyte contenant un solvant de type ester de carbonate peut provoquer la dissolution anodique de l'aluminium qui est utilisé en tant que collecteur de courant pour les électrodes positives. C'est notamment le cas lorsque le matériau d'électrode comprend un oxyde lamellaire porté à un potentiel supérieur à 3,7V vs. Li⁰.

L'art antérieur comporte diverses solutions permettant de remédier à cette problématique, par lesquelles on peut citer l'utilisation d'un co-sel dans l'électrolyte, l'augmentation de la concentration en sel, l'utilisation d'un collecteur de courant en un matériau différent de l'aluminium, mais aussi la mise au point de nouveaux sels ou de nouveaux solvants.

Cependant, ces solutions s'avèrent généralement coûteuses et aléatoires quant aux résultats.

Le prétraitement de l'aluminium avec le sel de lithium LiBOB (lithium bis(oxalate)borate) a également été proposé (Journal of Electrochemical Society, 2006 153 (9) B365-B369). Le document US2013157129 décrit le greffage covalent d'un copolymère sur un collecteur métallique par l'intermédiaire d'un groupe siloxane.

Quoi qu'il en soit, il existe toujours un besoin de développer des alternatives relativement aisées à mettre en oeuvre, adaptées à tout type de sel et de solvant d'électrolyte.

Le Demandeur a mis au point un accumulateur lithium-ion répondant à cette problématique grâce à l'utilisation d'aluminium greffé.

### EXPOSE DE L'INVENTION

La présente invention concerne un accumulateur lithium-ion ayant une électrode positive associée à un collecteur de courant en aluminium fonctionnalisé avec des groupements aromatiques. Cette fonctionnalisation du collecteur de courant permet d'atténuer, voire de supprimer le phénomène de dissolution anodique observé dans les accumulateurs lithium-ion de l'art antérieur.

Plus précisément, la présente invention concerne un accumulateur lithium ion comprenant successivement :
- un premier collecteur de courant ;
- une électrode négative en contact avec le premier collecteur de courant ;
- un séparateur d'électrodes comprenant un électrolyte, en contact avec l'électrode négative ;
- une électrode positive en contact avec le séparateur d'électrodes ;
- un deuxième collecteur de courant en contact avec l'électrode positive.

Selon l'invention, le deuxième collecteur de courant est en aluminium greffé de manière covalente avec au moins un groupement aromatique phényle C₆(Rᵢ)₅, formule dans laquelle :
Rᵢ désigne R₁, R₂, R₃, R₄ et R₅ qui sont indépendamment l'un de l'autre choisis dans le groupe comprenant :
   ▪ C(=O)O-Y⁺; SO₃⁻Y⁺ ; CH₂-SO₃⁻Y⁺ ; NR₃⁺X⁻ ; OH ; PO₃H⁻Y⁺ ;
   ▪ H ; F ; CₙF₂ₙ₊₁ ; CₙH₂ₙ₊₁ ;
   ▪ NO₂ ; -O-CH₂-O- ; les groupements imidazoles ; et les dérivés de groupements imidazoles ;
      avec Y = H, Na, K, Li, NR'₄ ; X= F, Cl, Br, I ;
      n étant un nombre entier compris entre 1 et 10 ;
      R = CₘH₂ₘ₊₁ ; R' = H, CₘH₂ₘ₊₁ et leurs mélanges, m étant un nombre entier compris entre 1 et 10 ;
      au moins deux groupements Rᵢ étant différent de H.

Pour plus de clarté, dans la formule C₆(Rᵢ)₅, « Rᵢ » désigne les cinq groupements R₁, R₂, R₃, R₄ et R₅, i étant un nombre entier compris entre 1 et 5.

De manière générale, le deuxième collecteur de courant se présente sous la forme d'un feuillet d'aluminium ayant une épaisseur comprise entre 2 et 100 micromètres, avantageusement entre 5 et 30 micromètres.

Ainsi, il présente avantageusement deux faces principales, dont l'une d'entre elles est en contact avec l'électrode positive.

Selon un mode de réalisation particulier, le deuxième collecteur de courant en aluminium est greffé sur une seule face principale.

Selon un autre mode de réalisation, il est greffé sur ses deux faces principales avec le même groupement aromatique phényle C₆(Rᵢ)₅ ou avec deux groupements aromatiques phényle C₆(Rᵢ)₅.

Dans le groupement aromatique phényle C₆(Rᵢ)₅, les groupements R₁, R₂, R₃, R₄ et R₅ sont respectivement en positions ortho, meta, para, meta et ortho par rapport à l'atome de carbone lié de manière covalente au deuxième collecteur de courant en aluminium, comme indiqué ci-dessous, l'astérisque * désignant l'atome de carbone lié de manière covalente au deuxième collecteur de courant en aluminium :

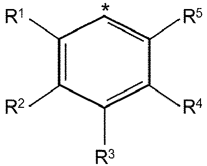

Selon un mode de réalisation préféré :
- R₁ = R₃ = R₅ = H et
- R₂ = R₄ = CF₃.

En outre, le groupement aromatique phényle C₆(Rᵢ)₅ représente avantageusement 0.1 à 10 % en poids, par rapport au poids du deuxième collecteur de courant, plus avantageusement 0.1 à 5% en poids.

Le deuxième collecteur de courant est en contact avec l'électrode positive de l'accumulateur.

L'électrode positive peut comprendre un matériau actif d'électrode choisi dans le groupe comprenant les oxydes de métaux de transition de type LiMO₂ ou LiMO₄ ; et les structures poly-anioniques incluant par exemple les phosphates de métaux de transition LiMPO₄,
M étant un métal ou un mélange de métaux de transition incluant par exemple Ni, Mn, Co, Al, Fe, Ti, V.

En outre, l'électrode positive peut généralement comprendre un liant (polyfluorure de vinylidène par exemple) et un additif électroniquement conducteur (particules de carbone par exemple).

L'électrode positive peut notamment comprendre, en poids, les proportions suivantes de liant/additif électroniquement conducteur/matériau actif: 2/2/96 à 10/10/80.

Comme déjà indiqué, l'accumulateur selon l'invention comprend un électrolyte positionné entre l'électrode positive et l'électrode négative. L'électrolyte peut être supporté, notamment par un séparateur d'électrodes électroniquement isolant.

L'électrolyte comprend au moins un sel de lithium. Pour exemple, ce sel peut être choisi dans le groupe comprenant le bis(trifluorométhane)sulfonimide de lithium (LiTFSI) ; l'hexafluorophosphate de lithium (LiPF₆) ; le tétrafluoroborate de lithium (LiBF₄) ; le bis(fluorosulfonyl)imide de lithium (LiFSI) ; le perchlorate de lithium (LiClO₄) ; l'hexafluoroarsenate de lithium (LiAsF₆) ; et le 4,5-dicyano-2-(trifluoromethyl)imidazole de lithium (LiTDI)

D'autre part, l'électrolyte peut également comprendre au moins un solvant organique, par exemple un ester de carbonate. Ce solvant organique peut notamment être choisi dans le groupe comprenant le carbonate d'éthylène ; le carbonate de propylène ; le carbonate de diethyle ; le carbonate de dimethyle et leurs mélanges.

L'électrolyte peut être liquide à la température de fonctionnement de l'accumulateur selon l'invention.

Comme déjà indiqué, l'électrolyte assure le transfert d'ions lithium entre deux électrodes de signes opposés.

En cycle de décharge, l'électrode positive et l'électrode négative de l'accumulateur selon l'invention correspondent respectivement à la cathode et à l'anode.

L'électrode négative peut comprendre un matériau actif d'électrode choisi dans le groupe comprenant le graphite ; le carbone dur ; le Li₄Ti₅O₁₂ (LTO) ; et le silicium.

En outre, elle peut généralement comprendre un liant (polyfluorure de vinylidène ou carboxyméthylcellulose par exemple) et un additif électroniquement conducteur (particules de carbone par exemple).

L'électrode négative peut notamment comprendre, en poids, les proportions suivantes de liant/additif électroniquement conducteur/matériau actif: 2/2/96 à 10/10/80.

L'électrode négative peut également être constituée de lithium métallique.

Les électrodes sont généralement enduites sur les collecteurs de courant.

Le greffage du deuxième collecteur de courant en aluminium est généralement réalisé par réduction d'un sel de diazonium de formule ⁺N₂-C₆(Rᵢ)₅. Le greffage est généralement réalisé par voie chimique ou par voie électrochimique.

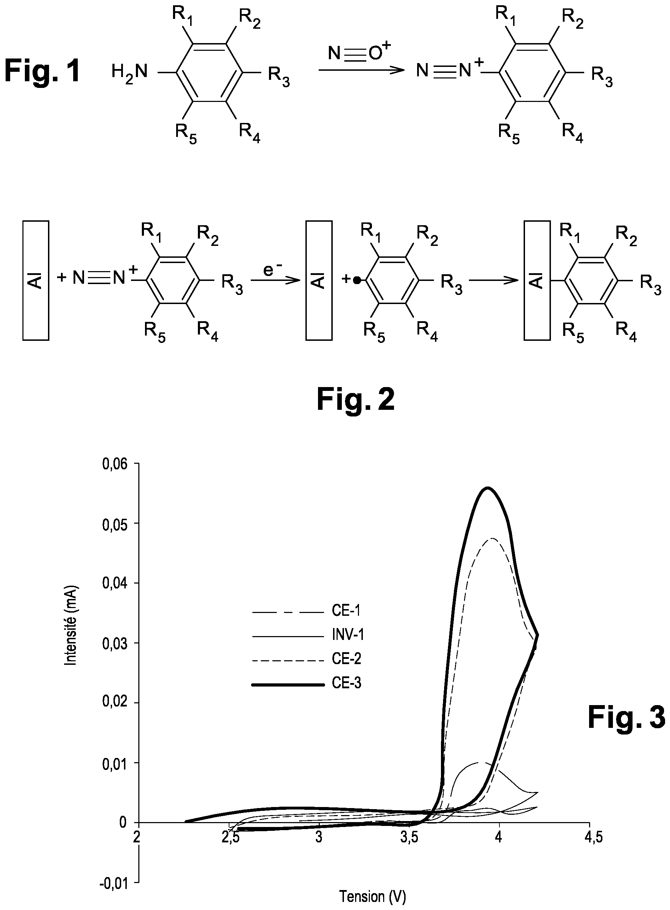

La réduction électrochimique (figure 2) est préférée étant donné qu'elle permet de prédéterminer et d'optimiser le taux de greffage grâce au contrôle par voltamétrie cyclique de la réaction et de sa cinétique.

Préalablement au greffage, le sel de diazonium N₂-C₆(Rᵢ)₅ peut être préparé par réaction entre un agent nitrosant (nitrite de sodium NaNO₂ ou acide nitreux HNO₂) et une amine de formule H₂N-C₆(Rᵢ)₅ selon les techniques conventionnelles (voir notamment la figure 1 et le document Assresahegn et al., Carbon 92 (2015), pages 362-381).

Le greffage du deuxième collecteur de courant permet d'améliorer la durée de vie de l'accumulateur selon l'invention en limitant ou en stoppant le phénomène de dissolution anodique.

L'invention et les avantages qui en découlent ressortiront mieux des figures et des exemples suivants donnés afin d'illustrer l'invention et non de manière limitative.

### DESCRIPTION DES FIGURES

La figure 1 illustre la formation d'un sel de diazonium.
La figure 2 illustre le greffage d'un composé aromatique sur un substrat, par réduction d'un sel de diazonium.
La figure 3 illustre les voltampérogrammes cycliques pour un collecteur de courant selon l'invention ou selon des contre-exemples.
La figure 4 illustre les voltampérogrammes cycliques pour un collecteur de courant selon l'invention ou selon des contre-exemples.

### EXEMPLES DE REALISATION DE L'INVENTION

Les exemples suivants mettent en oeuvre un collecteur de courant en aluminium (CE-1) ou en aluminium greffé avec un composé aromatique (CE-2, CE-3, INV-1).

Les collecteurs de courant en aluminium greffé ont été préparés par réduction d'un sel de diazonium en présence d'un feuillet d'aluminium (référence commerciale SUMIKEI A1085H-H18) dans un montage standard à trois électrodes en appliquant un potentiel (-1,5 V vs Hg/Hg₂SO₄) pendant une heure. Les sels de diazonium testés sont les suivants :
- INV-1 : ⁺N₂-C₆(Rᵢ)₅ avec i = 1 à 5 et R₁ = R₃ = R₅ = H ; R₂ = R₄ = CF₃ ;
- CE-2 : ⁺N₂-C₆(Rᵢ)₅ avec i = 1 à 5 et R₁ = R₂ = R₅ = R₄ = H ; R₃ = CF₃ ;
- CE-3 : ⁺N₂-C₆(Rᵢ)₅ avec i = 1 à 5 et R₁ = R₂ = R₅ = R₄ = H ; R₃ = SO₃H.

Les feuillets d'aluminium ainsi traités ont ensuite été placés en face de lithium métal avec un séparateur imbibé d'électrolyte (1M LiTFSI dans EC/PC 1/1 en volume ; EC : carbonate d'éthylène ; PC : carbonate de propylène).

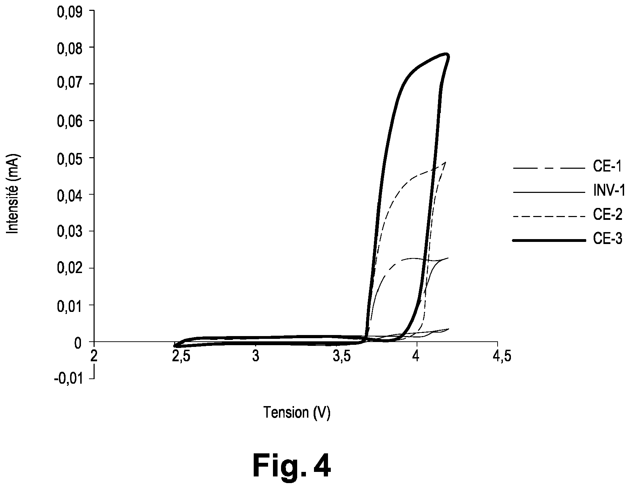

Ces assemblages ont été soumis à 10 cycles voltamétriques à 1mV/S entre 2,5 et 4,2V vs. Li métal (figures 3 et 4).

Le feuillet d'aluminium selon l'invention (INV-1 ; deux substituants différents de H sur C₆(Rᵢ)₅) conduit à une forte diminution des courants anodiques provoqués par la dissolution de l'aluminium.

Comme le montre la figure 4 (10 cycles), cette protection est stable sur plusieurs cycles.

Les feuillets CE-2 et CE-3 (un seul substituant différent de H sur C₆(Rᵢ)₅) conduisent au contraire à une augmentation de ces courants anodiques, par rapport au feuillet en aluminium conventionnel (CE-1). Il est possible que le milieu acide utilisé dégrade la passivation naturelle de l'aluminium et qu'ensuite, le traitement ne compense pas cette fragilisation.

## Revendications

1. Accumulateur lithium ion comprenant successivement :
- un premier collecteur de courant ;
- une électrode négative en contact avec le premier collecteur de courant ;
- un séparateur d'électrodes comprenant un électrolyte, en contact avec l'électrode négative ;
- une électrode positive en contact avec le séparateur d'électrodes ;
- un deuxième collecteur de courant en contact avec l'électrode positive ;
***caractérisé* en ce que** le deuxième collecteur de courant est en aluminium greffé de manière covalente avec au moins un groupement aromatique phényle C₆(Rᵢ)₅, formule dans laquelle :
Rᵢ désigne R₁, R₂, R₃, R₄ et R₅ qui sont indépendamment l'un de l'autre choisis dans le groupe comprenant :
▪ C(=O)O-Y⁺; SO₃⁻Y⁺ ; CH₂-SO₃⁻Y⁺ ; NR₃⁺X⁻ ; OH ; PO₃H⁻Y⁺ ;
▪ H ; F ; CₙF₂ₙ₊₁ ; CₙH₂ₙ₊₁ ;
▪ NO₂ ; -O-CH₂-O- ; les groupements imidazoles ; et les dérivés de groupements imidazoles ;
avec Y = H, Na, K, Li, NR'₄ ; X= F, Cl, Br, I ;
n étant un nombre entier compris entre 1 et 10 ;
R = CₘH₂ₘ₊₁ ; R' = H, CₘH₂ₘ₊₁ et leurs mélanges, m étant un nombre entier compris entre 1 et 10 ;
au moins deux groupements Rᵢ étant différent de H.

2. Accumulateur lithium ion selon la revendication 1, ***caractérisé* en ce que** le deuxième collecteur de courant se présente sous la forme d'un feuillet d'aluminium ayant une épaisseur comprise entre 2 et 100 micromètres.

3. Accumulateur lithium ion selon la revendication 1 ou 2, ***caractérisé* en ce que** R₁=R₃=R5=H et R₂=R₄=CF₃.

4. Accumulateur lithium ion selon l'une des revendications 1 à 3, ***caractérisé* en ce que** le groupement aromatique phényle C₆(Rᵢ)₅ représente 0.1 à 10 % en poids, par rapport au poids du deuxième collecteur de courant.

5. Accumulateur lithium ion selon l'une des revendications 1 à 4, ***caractérisé* en ce que** l'électrolyte comprend au moins un sel de lithium choisi dans le groupe comprenant le bis(trifluorométhane)sulfonimide de lithium ; l'hexafluorophosphate de lithium ; le tétrafluoroborate de lithium ; le bis(fluorosulfonyl)imide de lithium ; le perchlorate de lithium ; l'hexafluoroarsenate de lithium ; et le 4,5-dicyano-2-(trifluoromethyl)imidazole de lithium.

6. Accumulateur lithium ion selon l'une des revendications 1 à 5, ***caractérisé* en ce que** l'électrolyte comprend au moins un solvant organique choisi dans le groupe comprenant le carbonate d'éthylène ; le carbonate de propylène ; le carbonate de diethyle ; le carbonate de dimethyle et leurs mélanges.

7. Accumulateur lithium ion selon l'une des revendications 1 à 6, ***caractérisé* :**
- **en ce que** l'électrode positive comprend un matériau actif choisi dans le groupe comprenant les oxydes de métaux de transition LiMO₂ ou LiMO₄ ; et les phosphates de métaux de transition LiMPO₄ ;
M étant un métal ou un mélange de métaux de transition incluant Ni, Mn, Co, Al, Fe, Ti, et V ;
- et **en ce que** l'électrode négative comprend un matériau actif choisi dans le groupe comprenant le graphite ; le carbone dur ; le Li₄Ti₅O₁₂ ; et le silicium.

8. Accumulateur lithium ion selon l'une des revendications 1 à 7, ***caractérisé* en ce que** l'électrode positive comprend, en poids, les proportions suivantes de liant/additif électroniquement conducteur/matériau actif: 2/2/96 à 10/10/80.

9. Accumulateur lithium ion selon l'une des revendications 1 à 8, ***caractérisé* en ce que** l'électrode négative comprend, en poids, les proportions suivantes de liant/additif électroniquement conducteur/matériau actif: 2/2/96 à 10/10/80.

10. Accumulateur lithium ion selon l'une des revendications 1 à 9, ***caractérisé* en ce que** le deuxième collecteur de courant est greffé par réduction d'un sel de diazonium de formule ⁺N₂-C₆(Rᵢ)₅.

## Patentansprüche

1. Lithium-ionen-Akkumulator, umfassend gemäßeinander:
- einen ersten Stromkollektor;
- eine negative Elektrode, in Kontakt mit dem ersten Stromkollektor;
- eine Trennelektrode, die ein Elektrolyt in Kontakt mit der negativen Elektrode umfasst;
- eine positive Elektrode, in Kontakt mit der Trennelektrode;
- ein zweiter Stromkollektor in Kontakt mit der positiven Elektrode;
**dadurch gekennzeichnet, dass** der zweite Stromkollektor aus Aluminium besteht, kovalent gepfropft mit mindestens einer aromatischen Gruppe Phenyl-C₆ (Rᵢ)₅, in dieser Formel:
Rᵢ bezeichnet R₁, R₂, R₃, R₄ und R₅ die unabhängig voneinander ausgewählt werden aus der Gruppe bestehend aus:
▪ C(=O)O-Y+; SO₃-Y+ ; CH2-S03-Y+; NR₃+X⁻; OH ; PO₃H-Y+;
▪ H; F; CnF₂n+₁, CₙH₂ₙ+₁,
▪ NO₂; -O-CH₂-O- ; Imidazol- Gruppen; und Derivate von Imidazol- Gruppen;
mit Y = H, Na, K, Li, NR'₄ ; X= F, Cl, Br, I;
n ist eine ganze Zahl zwischen 1 und 10;
R = CₘH₂ₘ+i; R' = H, CₘH₂ₘ+₁, und Mischungen hiervon, m ist eine ganze Zahl zwischen 1 und 10;
mindestens zwei Ri- Gruppen die nicht H sind.

2. Lithium-ionen-Akkumulator gemäß Anspruch 1, **dadurch gekennzeichnet, dass** der zweite Stromkollektor die Form einer Aluminiumfolie mit einer Dicke zwischen 2 und 100 Mikrometern hat.

3. Lithium-ionen-Akkumulator gemäß Anspruch 1, **dadurch gekennzeichnet, dass** R₁ = R₃ = R₅ = H und R₂ = R₄ = CF₃.

4. Lithium-ionen- Akkumulator gemäß einem der Ansprüche 1 bis 3, **dadurch gekennzeichnet, dass** die aromatische Gruppe Phenyl-C₆ (Rᵢ)₅, einen Anteil von 0,1 bis 10 Gewichts- %, bezogen auf das Gewicht des zweiten Stromkollektors hat.

5. Lithium-ionen-Akkumulator gemäß einem der Ansprüche 1 bis 4, **dadurch gekennzeichnet, dass** das Elektrolyt mindestens ein Lithiumsalz enthält, ausgewählt aus der Gruppe umfassend Lithium- bis(trifluoromethan)sulfonimid; Lithium- hexafluorophosphat; Lithium- tetrafluoroborat, Lithium-bis(fluorosulfonyl)imid; Lithiumperchlorat, Lithiumhexafluoroarsenat; und Lithium- 4,5-dicyano-2-(trifluoromethyl)imidazol.

6. Lithium-ionen-Akkumulator gemäß einem der Ansprüche 1 bis 5 **dadurch gekennzeichnet, dass** das Elektrolyt mindestens ein organisches Lösungsmittel enthält, ausgewählt aus der Gruppe bestehend aus Ethylenkarbonat; Propylenkarbonat; Diethylkarbonat; Dimethylkarbonat und ihren Mischungen.

7. Lithium-ionen-Akkumulator gemäß einem der Ansprüche 1 bis 6 **dadurch gekennzeichnet, dass**
- die positive Elektrode ein aktives Material umfasst, ausgewählt aus der Gruppe umfassend die Oxide von Übergangsmetallen LiMO₂ oder LiMO₄; und die Phosphate von Übergansmetallen LiMPO₄ ;
M ist ein Übergangsmetall oder eine Mischung derartiger Metalle, einschließlich Ni, Mn, Co, Al, Fe, Ti und V;
- und dass die negative Elektrode ein aktives Material umfasst, ausgewählt aus der Gruppe umfassend Graphit; harten Kohlenstoff; Li₄Ti₅O₁₂; und Silizium.

8. Lithium-ionen-Akkumulator gemäß einem der Ansprüche 1 bis 7 **dadurch gekennzeichnet, dass** die positive Elektrode, gemäß Gewicht, die folgenden Verhältnisse aus Bindemittel/ elektronisch leitendem Zusatz/ aktivem Material enthält: 2/2/96 bis 10/10/80.

9. Lithium-ionen-Akkumulator gemäß einem der Ansprüche 1 bis 8 **dadurch gekennzeichnet, dass** die negative Elektrode, gemäß Gewicht, die folgenden Verhältnisse aus Bindemittel/ elektronisch leitendem Zusatz/ aktivem Material enthält: 2/2/96 bis 10/10/80.

10. Lithium-ionen-Akkumulator gemäß einem der Ansprüche 1 bis 9 **dadurch gekennzeichnet, dass** der zweite Stromkollektor durch Reduktion gepfropft ist mit einem Diazoniumsalz mit der Formel +N₂-C₆ (Rᵢ)₅.

## Claims

1. A lithium-ion accumulator successively comprising:
- a first current collector;
- a negative electrode in contact with the first current collector;
- an electrode separator comprising an electrolyte, in contact with the negative electrode;
- a positive electrode in contact with the electrode separator;
- a second current collector in contact with the positive electrode;
***characterized* in that** the second current collector is made of aluminum covalently grafted with at least one phenyl aromatic group C₆(Rᵢ)₅, in which formula:
Rᵢ designates R₁, R₂, R₃, R₄ and R₅ which are independently from one another selected from the group comprising:C(=O)O-Y⁺; SO₃⁻Y⁺; CH₂-SO₃⁻Y⁺; NR₃⁺X⁻; OH; PO₃H⁻Y⁺;H; F; CₙF₂ₙ₊₁; CₙH₂ₙ₊₁;NO₂; -O-CH₂-O-; imidazole groups; and derivatives of imidazole groups;
with Y = H, Na, K, Li, NR'₄; X= F, Cl, Br, I;
n being an integer in the range from 1 to 10;
R = CₘH₂ₘ₊₁; R' = H, CₘH₂ₘ₊₁ and mixtures thereof, m being an integer in the range from 1 to 10;
at least two groups Rᵢ being different from H.

2. The lithium accumulator of claim 1, ***characterized* in that** the second current collector appears in the form of an aluminum foil having a thickness in the range from 2 to 100 micrometers.

3. The lithium accumulator of claim 1, ***characterized* in that** R₁= R₃ = R₅ = H and R₂ = R₄ = CF₃.

4. The lithium accumulator of claim 1 to 3, ***characterized* in that** phenyl aromatic group C₆(Rᵢ)₅ amounts to from 0.1 to 10 wt.%, with respect to the weight of the second current collector.

5. The lithium accumulator of any of claims 1 to 4, ***characterized* in that** the electrolyte comprises at least one lithium salt selected from the group comprising lithium bis(trifluoromethane)sulfonimide; lithium hexafluorophosphate; lithium tetrafluoroborate; lithium bis(fluorosulfonyl)imide; lithium perchlorate; lithium hexafluoroarsenate; and lithium 4,5-dicyano-2-(trifluoromethyl)imidazole.

6. The lithium accumulator of any of claims 1 to 5, ***characterized* in that** the electrolyte comprises at least one organic solvent selected from the group comprising ethylene carbonate; propylene carbonate; diethyl carbonate; diméthyl carbonate, and mixtures thereof.

7. The lithium accumulator of any of claims 1 to 6, ***characterized*:**
- **in that** the positive electrode comprises an active material selected from the group comprising transition metal oxides LiMO₂ or LiMO₄; and transition metal phosphates LiMPO₄;
M being a metal or a mixture of transition metals including Ni, Mn, Co, Al, Fe, Ti, and V;
- and **in that** the negative electrode comprises an active material selected from the group comprising graphite; hard carbon; Li₄Ti₅O₁₂; and silicon.

8. The lithium accumulator of any of claims 1 to 7, ***characterized* in that** the positive electrode comprises, by weight, the following proportions of binder/electronically-conductive additive/active material: 2/2/96 to 10/10/80.

9. The lithium accumulator of any of claims 1 to 8, ***characterized* in that** the negative electrode comprises, by weight, the following proportions of binder/electronically-conductive additive/active material: 2/2/96 to 10/10/80.

10. The lithium accumulator of any of claims 1 to 9, ***characterized* in that** the second current collector is grafted by reduction of a diazonium salt of formula ⁺N₂-C₆(Rᵢ)₅.
